# EUROPEAN PATENT APPLICATION

(11) **EP 3 825 223 A1**
(43) Date of publication of application: **26.05.2021**
(21) Application number: 20164285.7
(22) Date of filing: 19.03.2020
(51) Int. Cl.: B63B 27/14, B63B 27/30

(54) **A GANGWAY SYSTEM AND METHOD FOR PROVIDING WALKABLE ACCESS BETWEEN A VESSEL AND AN OFFSHORE STRUCTURE**

(71) Applicant: SubC Partner A/S, 6700 Esbjerg (DK)
(72) Inventor: VÆRNDAL, Rune, 6715 Esbjerg N (DK)
(74) Representative: Patrade A/S

(57) **Abstract**

Disclosed is a gangway system providing walkable access between a vessel and an offshore structure. The gangway system comprises a base, and from the base a base extension configured to operate towards an offshore structure. The gangway system is operated by a drive system powered by electric power provided via a power train.

## Description

### Field of the Invention

The present invention relates to a gangway system for providing walkable access between a vessel and an offshore structure.

The present invention relates to a method for providing walkable access between a vessel and an offshore structure.

### Background of the Invention

In the past 10 years, the need for access to offshore structures has risen sharply, primarily due to a strong increase in the installation of offshore wind turbines.

At the same time, there has been a regulatory tightening of safety rules, and the offshore companies have a higher focus on employee safety.

As a result, the most commonly used methods for transporting personnel and tools between a vessel and a fixed installation at sea have been either lift using a crane or transfer using a boat specially designed to fit into a boat landing on the fixed installation.

Both of the old transfer systems are slow and require some preparation before transfer. The disadvantages and the higher demands lead to the development of motion compensating access systems such as described in WO2015009163. These known systems create a stable platform directly between ship and installation.

WO20115009163 describes an apparatus and a method for actively controlling a gangway to ensure safe, reliable and accurate motion compensation in the manoeuvring of the gangway for establishing of a walkable access connection between vessels or between vessel and an offshore structure. The apparatus is capable of sea motion compensation, however the drive system is controlled using hydraulics, which is energy inefficient and expensive due to the complexity of the system.

The known systems are developed using basic knowledge of cranes and are therefore all designed based on a boom and a number of hydraulic cylinders to angle the boom and a swivel to rotate about a vertical axis. However, these systems are more expensive due to their complexity using pumps and the fluid system providing the work and due to the pumps and systems inherit higher energy consumption.

The higher energy consumption requires extensive modifications of the vessels carrying these systems, these modifications can be reduced by reducing the needed power consumption.

Furthermore, the present invention has surprisingly shown to be faster at sea motion compensation compared to the known systems. This is believed to be due to fewer components between the drive system and the gangway.

### Object of the Invention

It is an object of the invention to provide a gangway system providing walkable access between a vessel and an offshore structure, where the gangway system is powered by electrical power.

It is an object of the invention to provide a method for converting the mechanical movement of the gangway system into electrical energy.

### Description of the Invention

An object of the invention is achieved by a gangway system providing walkable access between a vessel and an offshore structure. The gangway system comprises a base, and from the base a base extension configured to operate towards an offshore structure. The gangway system is operated by a drive system powered by electric power provided via a power train.

The base extension is adapted for enabling a person to walk from the vessel along the base extension to the offshore structure. Thus the base extension is the gangway.

The offshore structure may be a wind turbine generator or an oil rig or another vessel.

The gangway system also comprises the necessary sensors or sensor suite and controllers to ensure safe and reliable motion compensation in the maneuvering of the base extension, however this will not be described in detail because such compensation systems are well-known within the art and the specific method of sea motion compensation is not part of the present invention.

The drive system may be one or more motors powered by electric power, thereby removing the need for any hydraulics or pneumatics.

The drive system does not comprise hydraulics or pneumatics. This enables the gangway system to become more energy efficient, which reduces the needed modifications of the vessel on which the gangway system is to be placed. Thereby, the gangway system is more an add-on to the vessel.

The drive system may be one or more motors powered by electric power, thereby removing the need for any hydraulics or pneumatics.

Calculations have shown that the gangway system with motors powered by electric power is at least 20 % more energy efficient compared to a system using hydraulics or pneumatics.

The base extension may further comprise a second extension and optionally a third extension, where the second and third extensions enable the gangway to have a longer reach.

The second and third extensions may be slideable along the base extension by a rail system or any other displacement means.

In an aspect of the invention, the base extension may be pivotally arranged on the base around a pivot axis, the base extension having an annual gear extending from a pivot point the pivot axis (60) to a pinion driven by the drive system.

Thereby, the gangway system is further simplified with fewer energy conversions compared to known systems. The electrical power drive system converts electrical energy to a rotation of a pinion, which rotation is transferred to the annual gear and thus causes the entire base extension to rotate around the pivot axis.

This reduces the energy consumption as the drive system using electrical energy uses less energy than hydraulics and pneumatics, but the efficiency of the entire gangway system also increases due to the few mechanical energy transfers.

Thereby, less energy is needed when the movement or tilting of the vessel due to sea motion requires the gangway to be rotated clockwise or counter clockwise.

In an embodiment, the base may comprise a bottom gear, which can be driven by the vessel or by the drive system. The bottom gear controls rotation of the base and thus the gangway system around a base pivot axis. Thereby, the base extension can be rotated such that the base extension is perpendicular to the vessel or rotate such that the base extension is parallel with the vessel or any other angle.

In an embodiment, the base is adapted to be positioned on a platform on the vessel, wherein the vessel comprises means for rotating the gangway system by rotating the platform. The means for rotating may comprise a bottom gear controlling the orientation of the platform and one or more motors for driving the bottom gear.

In an aspect of the invention, the gangway system may comprise a generator connected to an energy storage device being part of the power train. The generator is connected to a mechanical arrangement configured to convert mechanical movements between the gangway/base extension and the vessel, the gangway/base extension and the offshore structure, or both, into electrical energy.

The sea motion will cause the vessel to move relative to the offshore structure and the vessel will wobble or tilt. However, the base extension should be as stationary as possible in order to increase safety when people transfer to and from the offshore structure.

Therefore, it is necessary for the base extension to rotate or pivot upwardly, which is energy consuming, and to rotate downwardly where the downward motion in many cases can be due to gravity, thus releasing potential energy.

The generator, energy storage device and the mechanical arrangement enable the released potential energy to be converted into electrical energy, which is stored in the energy storage device. The stored energy is then used, when the base extension is to be rotated upwardly once more.

This will further reduce complexity of the system as the overall power consumption is reduced. This also reduces the modification of the vessel to carry the gangway system.

The energy storage device may be a battery or battery stack. The energy storage device may comprise capacitors or combinations of batteries and capacitors.

Flywheels, springs or other mechanical energy storage arrangements may be installed as the energy storage device(s).

In a preferred embodiment, the drive system is adapted to convert mechanical movements between the base and the base extension into electrical energy, thus the drive system is also the generator. The mechanical arrangement is the annual gear, which transfers kinetic energy to the drive system through the one or more pinions. The gangway system comprises the energy storage device connected to the drive system for storing the electrical energy.

Thereby, the entire gangway system is further reduced in size and complexity as one or more operating motors of the drive system also function as generators.

The one or more operating motors may be dynamotors.

In an aspect of the invention, the power train may comprise a variable frequency drive VFD configured to be driven by a power supply and/or the energy storage device. The variable frequency drive VFD is configured to driving and operating the drive system. The variable frequency drive is a solid state solution comprising no moving parts, this is a significant improvement compared to the known fluid systems at present. Thus increasing reliability and reduce maintenance costs

Furthermore, the variable frequency drive is energy efficient with a low conversion loss.

The combination of the variable frequency drive, the energy storage device, generators and mechanical arrangement greatly increases the overall energy efficiency of the gangway system.

The power supply may be a motor of the vessel.

In an aspect of the invention, the drive system may comprise one or more electromagnetic drivers such as electric motors or electric actuators.

This enables the drive system to change rotation i.e. angular position of the base extension relatively faster than systems using hydraulics or pneumatics. Thereby, the overall safety is increased for the persons walking over the base extension.

Furthermore, the electromagnetic drivers are more energy efficient.

In an aspect of the invention, the base extension may comprise one or more extension arms configured to extend from the base extension along the extension axis defined by the base extension.

Thereby, the extent of the gangway system can be adapted for different situations. The one or more extension arms may be slideable by electric motors or electric actuators.

The one or more extension arms may be extendable using a rail system.

In an aspect of the invention, the generator and the drive system are the same unit or units.

Thereby, the gangway system is simplified as the drive system is capable of causing the base extension to rotate upwardly and able to convert the downward movement to electric energy.

In an embodiment, a vessel may comprise a gangway system as previously described.

An object of the invention is achieved by a method of providing walkable access between a vessel and an offshore structure.

The method may comprise an act of generating energy by a generator driven by mechanical movements of a base extension followed by an act of storing energy at an energy storage device connected a power train configured to operate the base extension.

The skilled person would know that the generated energy will be in the form of electricity.

The method may further comprise an act of operating the base extension by using energy from the energy storage device.

The base extension will move upwards and downwards and the downwards movement is converted by the generator to electric energy, which is stored in the energy storage device.

The energy storage device may be a battery or battery pack.

The stored energy may afterwards be used to operate the base extension by using energy from the energy storage device.

Thereby, the method provides walkable access between a vessel and an offshore structure while limiting the overall energy consumption.

In an aspect of the invention, the act of generating is performed by driving the generator using an annual gear pivotally arranged between the base extension and a base. Thereby, the energy conversion efficiency is high as the mechanical movement can directly drive the generators or drive the generators through one or more pinions, which limits loss due to heat.

Furthermore, the generators may be dynamotors and used to rotate the base extension upwardly.

In an aspect of the invention, the act of operating may comprise an act of
- turning the base extension by using only electromagnetic drivers; and/or
- pivoting the base extension by using only electromagnetic drivers.

The act of turning the base extension turns the base extension in a substantially horizontal plane. This can be from a position where the base extension extends along the vessel to a position where the base extension extends substantially perpendicular to the vessel or any position in-between.

The electromagnetic drivers may be electric motors or electric actuators. Thereby the number of parts of the system can be reduced, because there is no need for pumps or fluid connections, which is required using hydraulics or pneumatics.

In an aspect of the invention, the act of operating comprises an act of - extending an extension arm from the base extension by using only one or more electromagnetic drivers.

The electromagnetic drivers may be electric motors or actuators. Thereby the number of parts of the system can be reduced, because there is no need for pumps or fluid connections, which is required using hydraulics or pneumatics.

In an aspect of the invention, the act of operating the gangway is performed using power provided via a variable frequency drive (VFD) powered by a power supply, from the energy storage device, or both.

The variable frequency drive is a solid state solution comprising no moving parts, this is a significant improvement compared to the known fluid systems at present. Thus increasing reliability and reducing maintenance costs.

Furthermore, the variable frequency drive is energy efficient with a low conversion loss.

The combination of the variable frequency drive, the energy storage device, generators and mechanical arrangement greatly increases the overall energy efficiency of the gangway system.

The power supply may be a motor of the vessel.

An object of the invention is achieved by a gangway system having a sensor suite, power line means and controlling means adapted to execute the acts of the method.

The power line means may be cables for conducting electric energy.

An object of the invention is achieved by a computer program product comprising instructions to cause the gangway system to execute the acts according to the method.

An object of the invention is achieved by a computer-readable medium having stored thereon the computer program.

### Description of the Drawing

Embodiments of the invention will be described in the figures, whereon:
Fig. 1 illustrates a gangway system positioned on a vessel
Fig. 2 illustrates a gangway system positioned on a vessel and cross sections of the gang way system;
Fig. 3 illustrates a drive system of a gangway system;
Fig. 4 illustrates another view of the drive system of a gangway system;
Fig. 5 illustrates a pivotal movement of the gangway system;
Fig. 6 illustrates a power train overview;
Fig. 7 illustrates a control system overview;
Fig. 8 illustrates a method of providing a walkable access gangway between a vessel and an offshore structure; and
Fig. 9 illustrates another embodiment of the method of providing a walkable access gangway between a vessel and an offshore structure.

### Detailed Description of the Invention

| **Item** | **No** |
|---|---|
| Vessel | 10 |
| Offshore structure | 20 |
| Extension axis (X) | 50 |
| Pivot axis (Y) | 60 |
| Base pivot axis (Z) | 70 |
| Gangway | 100 |
| Base | 110 |
| Base extension | 120 |
| Second extension | 122 |
| Third extension | 124 |
| Mechanical arrangement | 130 |
| Pivot point | 140 |
| Annual gear | 150 |
| Pinion | 160 |
| Bottom gear | 162 |
| Drive system | 170 |
| operating motors | 170I, 170II, 170III, 170IV, 170V, 170VI |
| Horisontal motor | 172 |
| Vertical motor | 174 |
| Electromagnetic drivers | 180 |
| Sensor suite | 190 |
| Power line means | 192 |
| Controller | 194 |
| Feedback controller | 195 |
| Human-machine interface | 196 |
| Power train | 200 |
| Generator | 210 |
| Variable frequency drive VFD | 220 |
| Power supply | 230 |
| Energy storage device | 250 |
| Method of providing | 1000 |
| Generating | 1100 |
| Driving | 1110 |
| Storing | 1200 |
| Operating | 1300 |
| Turning | 1310 |
| Pivoting | 1320 |
| Extending | 1330 |

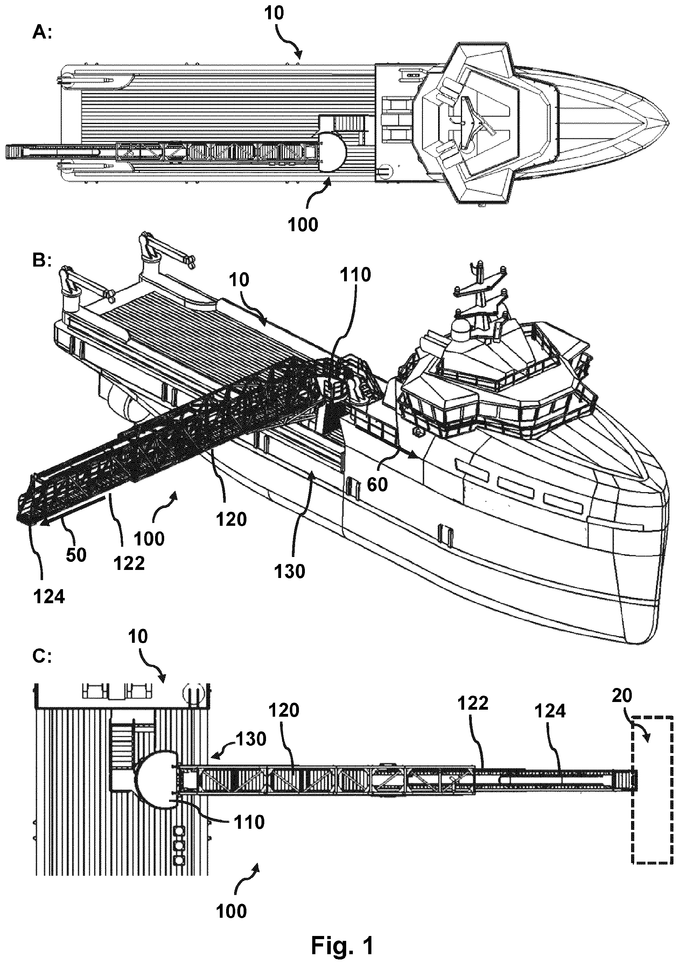

Fig. 1 illustrates a gangway system 100 positioned on a vessel 10. The gangway system 100 and vessel 10 is shown in
- a top view (A), where the gangway system 100 extends along a longitudinal direction of the vessel 10,
- a perspective view (B), where the gangway system 100 extends perpendicular to the vessel 10, and
- a second top view (B), where the gangway system 100 extends perpendicular to the vessel 10.

The gangway system 100 is adapted to provide walkable access between a vessel 10 and an offshore structure 20. The offshore structure 20 is represented by a dashed rectangle.

The offshore structure 20 can be an offshore wind turbine generator, or an oil rig, or another vessel, or any other offshore structure.

The gangway system 100 comprises a base 110 which supports the other elements of the gangway system 100. The base 110 is further adapted for connection with the vessel 10.

The vessel 10 is not essential to the invention, even though the gangway system 100 is shown already placed on the vessel 10, because the gangway system 100 could be placed on any vessel 10 or offshore structure 20.

A base extension 120 extends from the base 110, wherein the base extension 120 is configured to operate towards the offshore structure 20. The base extension 120 further comprises a secondary extension 122 and a tertiary extension 124, which are adapted to be retractably extended along a direction defined by the base extension 120 as shown in fig. 1C.

The gangway system 100 is operated by a drive system 170 powered by electric power provided via a power train 200. The drive system 170 and power train 200 are not shown in fig. 1.

The base extension 120 extends along an extension axis 50 as shown in fig. 1B. A pivot axis 60 around which the base extension 120 is rotatable.

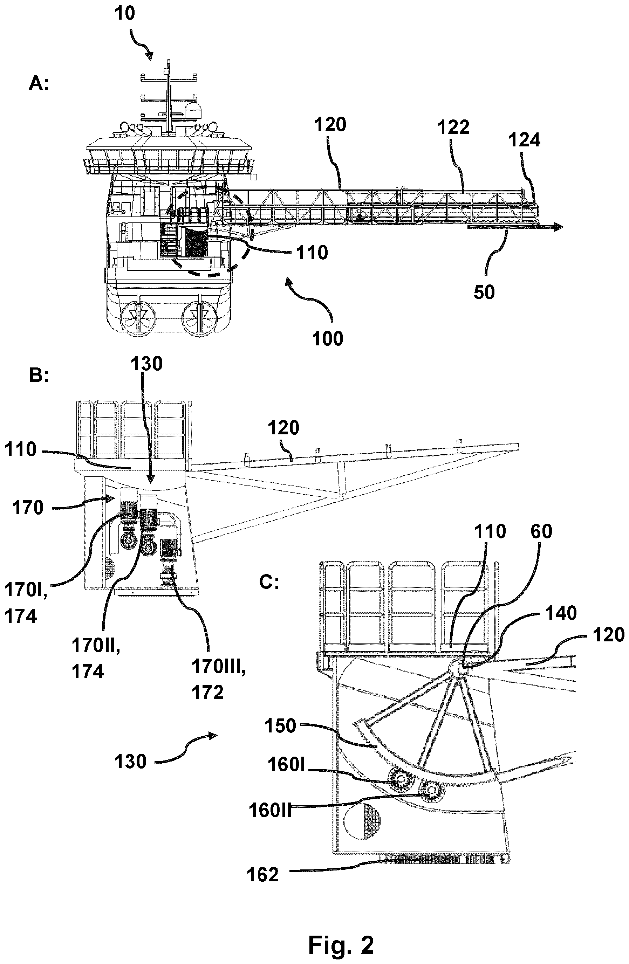

Fig. 2 illustrates a gangway system 100 positioned on a vessel 10 and cross sections of the gangway system 100. The figure discloses more features of the gangway system 100.

The gangway system 100 is adapted to provide walkable access between a vessel 10 and an offshore structure 20.

The gangway system 100 comprises a base 110 which supports the other elements of the gangway system 100. The base 110 is further adapted for connection with the vessel 10.

A base extension 120 extends from the base 110, wherein the base extension 120 is configured to operate towards the offshore structure 20. The base extension 120 further comprises a secondary extension 122 and a tertiary extension 124, which are adapted to be retractably extended along a direction defined by the base extension 120.

The gangway system 100 is operated by a drive system 170 powered by electric power provided via a power train 200. The power train 200 is not shown in fig. 2.

The gangway system 100 comprises a mechanical arrangement 130 for converting mechanical movements between the gangway 100 and the vessel 10 into electrical energy. In practice, the movement of the base extension 120 relative to the vessel 10 is converted into electrical energy, which may be stored in an energy storage device 250.

Fig. 2B discloses part of the drive system 170. The sub parts of the drive system 170 are denoted with roman numerals. The drive system 170 comprises two operating motors 1701, 170II being vertical motors 174 as they control the vertical movement of the base extension 120 by driving pinions 1601, 160II connected to an annual gear 150 as shown in fig. 2C. The operating motors 1701, 170II directly drives the pinions 1601, 160II, which are directly connected to the annual gear 150, thereby enabling a simplification and a reduction of size of the gangway system 100.

The drive system 170 further comprises an operating motor 170III being a horizontal motor 172 connected to a bottom gear 162 for connection with the vessel 10, wherein the driving of the horizontal motor 172 causes the bottom gear 162 to turn the gangway system 100, thereby turning the base extension 120 and the extension axis 50.

Fig. 2C discloses that the base extension 120 is pivotally arranged on the base 110 around a pivot point 140 defining a pivot axis 60, the base extension 120 having the previously annual gear 150 extending from the pivot point 140 to two pinions 160 operated by the drive system 170.

The mechanical arrangement 130 converts energy when the base extension 120 is being pivotally arranged to the base around the pivot point 140, the base extension 120 having the annual gear 150 extending from the pivot point 140 to two pinions 160 operated by the drive system 170.

The vertical motors 174 are dynamotors and when the sea causes the vessel 10 in fig. 2A to tilt counter-clockwise, the base extension 120 will pivot clockwise causing the vertical motors 174 to produce electrical energy which can be stored at the energy storage device 250.

When the vessel 10 in fig. 2A tilts clockwise, the electrical energy stored in energy storage device 250 is used to pivot the base extension 120 counter-clockwise. Depending on the relative clockwise- and counter-clockwise tilt of the vessel 10 and gangway system 100 further electrical energy must be provided by the power train 200 due to conversion losses.

However, the vertical motors 174 are by the pinions 160 in direct contact with the annual gear 150, thereby minimizing the conversion loss.

The energy conversion and the reduced conversion loss enable the entire gangway system 100 to become more compact as the needed external power is decreased significantly, thus the needed power by the external power supply is decreased.

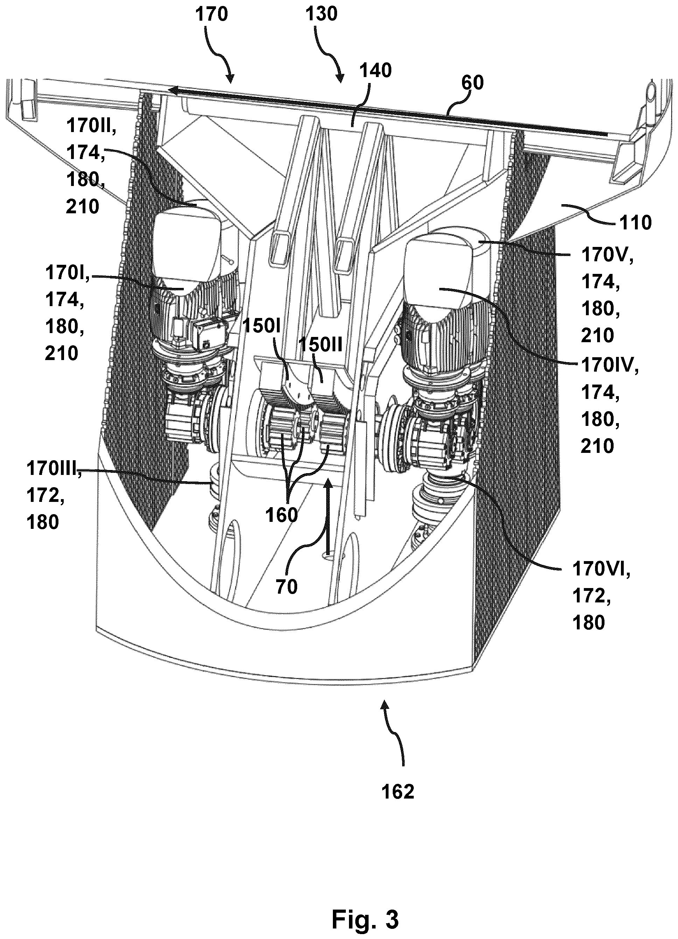

Fig. 3 illustrates a drive system 170 of a gangway system 100. A cross-section of a base 110 is made to expose the mechanical arrangement 130.

A base extension 120 is not shown in full, however the end of the base extension 120 with a pair of annual gears 1501, 150II is shown. The annual gears 150 are pivotal about a pivot axis 60 and extending from a pivot point 140.

In the present embodiment, the drive system 170 comprises pairs of operating motors 1701, 170II, 170V, 170IV positioned on each side of the pair of annual gears 150. The operating motors 1701, 170II, 170IV, 170V being vertical motors 174 and more specifically electromagnetic drivers 180. Each operating motor 1701, 170II, 1701V, 170V is connected to one of the annual gears 1501, 150II by a pinion 160 such that two operating motor 1701, 170II are connected to the same annual gear 1501 and operating motors 1701V, 170V are connected to the same annual gear 150II.

The operating motors 1701, 170II, 1701V, 170V are electromagnetic drivers 180. Thereby, the base 110 can be more compact and the energy conversion loss is reduced, because the operating motors 1701, 170II, 1701V, 170V convert electrical energy to mechanical movement causing the pinions 160 to rotate the annual gears 150 and thus the base extension 120.

Furthermore, the operating motors 1701, 170II, 1701V, 170V are, in a preferred embodiment, generators 210, i.e. dynamotors, such that some of the mechanical movements of the base extension 120 can be converted to electrical energy which can be stored in an energy storage device 250 such as a battery.

The drive system 170 further comprises a pair of operating motors 170III, 170VI which are horizontal motors 172 being configured to drive a bottom gear 162 causing the base 110 to rotate about a base pivot axis 70.

The operating motors 170III, 170VI being electromagnetic drivers 180 such that they can be driven using electric energy.

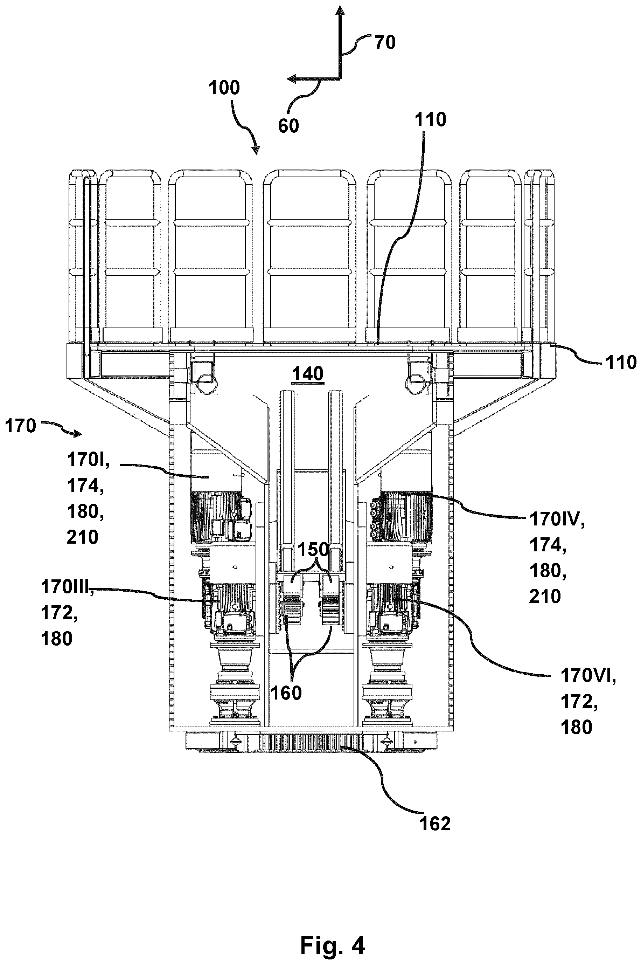

Fig. 4 illustrates another view of the drive system 170 of a gangway system 100. The gangway system 100 and drive system 170 are identical to the embodiment disclosed in fig. 3.

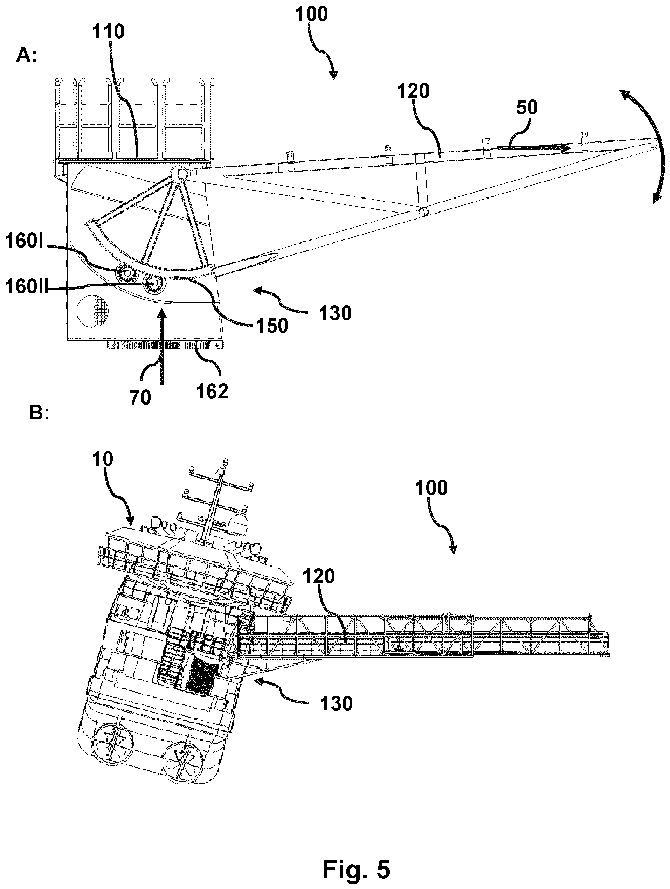

Fig. 5 illustrates a pivotal movement of the gangway system 100, where fig. 5A discloses a cross section of the gangway system 100 and fig. 5B discloses a vessel 10 tilting having the gangway system 100.

The gangway system 100 comprises a base extension 120 extending from a base 110 connected to the vessel 10. The base 110 being rotatable around a base pivot axis 70 relative to the vessel 10 by a drive system 170 driving a bottom gear 152 connected to the vessel 10.

The base extension 120 being connected to the drive system 170 by the annual gear 150 extending from a pivot point 140 and at least two pinions 1601, 160II.

In fig. 5B the vessel 10 is tilted, the gangway system 100 compensates from this tilt by lifting the base extension 120 upwards by rotating the base extension counter clockwise around the pivot point 140. This rotation requires energy.

The vessel 10 may afterwards tilt in the opposite direction. The gangway system 100 can compensate this tilt by dropping the base extension causing the base extension to rotate clockwise around the pivot point 140, this rotation can be due to gravity alone or be gravity-assisted. If the drive system 170 comprises generators 210 such as dynamotors then the clockwise rotation can be converted to electric energy for later use.

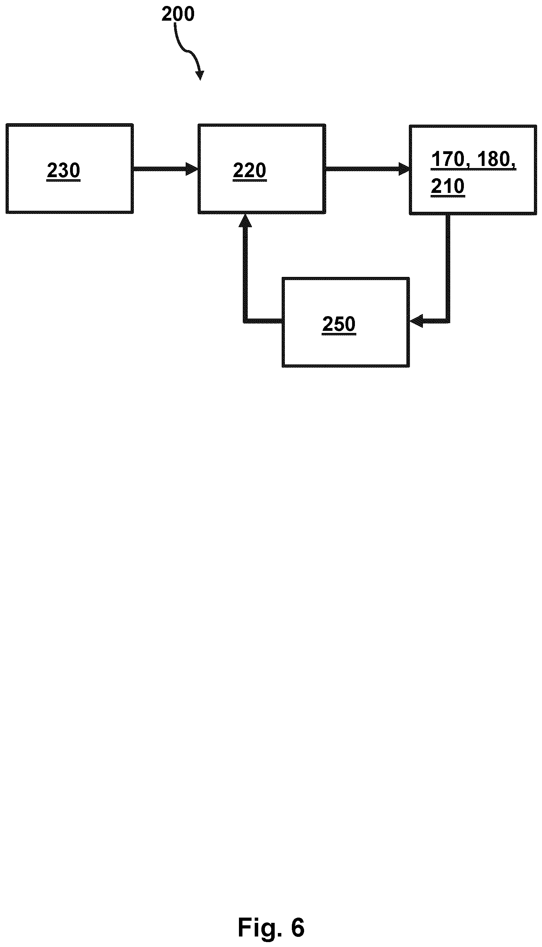

Fig. 6 illustrates a power train 200 overview.

The variable frequency drive VFD 220 is a central part of the power train 200. The variable frequency drive 220 is in part powered by a power supply 230 which may be connected or powered by the electric system of the vessel.

The variable frequency drive 220 drives the drive system 170 comprising one or more electromagnetic drivers 180. The one or more electromagnetic drivers 180 are generators 210, thus movement of the base extension is converted into electric energy, which is stored in an energy storage device 250. Thus, part of the energy is regenerated as electric energy.

The variable frequency drive 220 is in part powered by the energy storage device 250 for driving the drive system 170.

Thereby, the power train 200 enables the gangway system to become more energy efficient since part of the kinetic energy is regenerated as electric energy and reused.

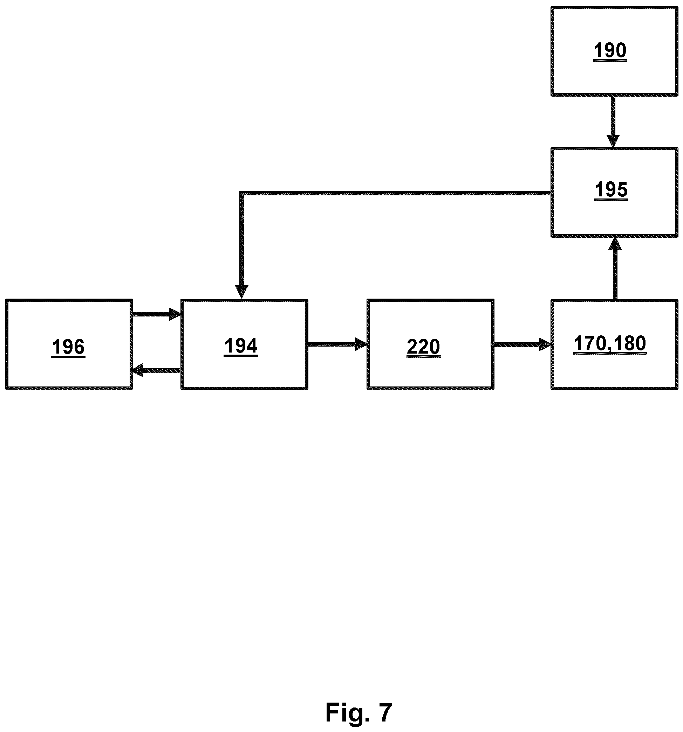

Fig. 7 illustrates a control system overview.

The control system comprises a controller 194, which can be interfaced by a person using a human-machine interface 196. The person may then change parameters or control the overall orientation of the base extension 120.

The controller 194 controls a variable frequency drive (VFD) 220, which drives the drive system 170.

The gangway system 100 comprises a sensor suite 190, which provides information of a relative positon of the base extension 120. The positioning of the sensor suite 190 is well-known within the art and the skilled would know how to implement the sensor suite 190. The drive system 170 and the sensor suite 190 provide information to a feedback controller in communication with the controller 194.

The controller 194 will then adjust control of the variable frequency drive (VFD) 220 based on feedback.

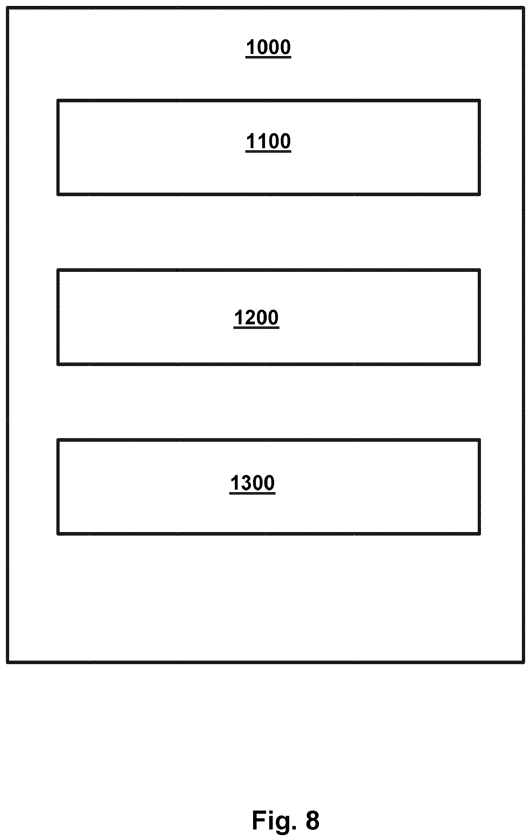

Fig. 8 illustrates a method of providing 1000 a walkable access gangway between a vessel 10 and an offshore structure 20.

The method of providing 1000 walkable access between a vessel 10 and an offshore structure 20 comprises an act of generating 1100 energy with a generator 210 driven by mechanical movements of a base extension 110. The skilled person would know that the generated energy is in the form of electricity.

The method 1000 comprises an act of storing 1200 energy in an energy storage device 250 connected a power train 200 configured to operate the base extension 110.

The method 1000 comprises an act of operating 1300 the base extension 110 by using energy from the energy storage device 250.
Thereby, the method 1000 provides walkable access between a vessel 10 and an offshore structure 20 while limiting the overall energy consumption.

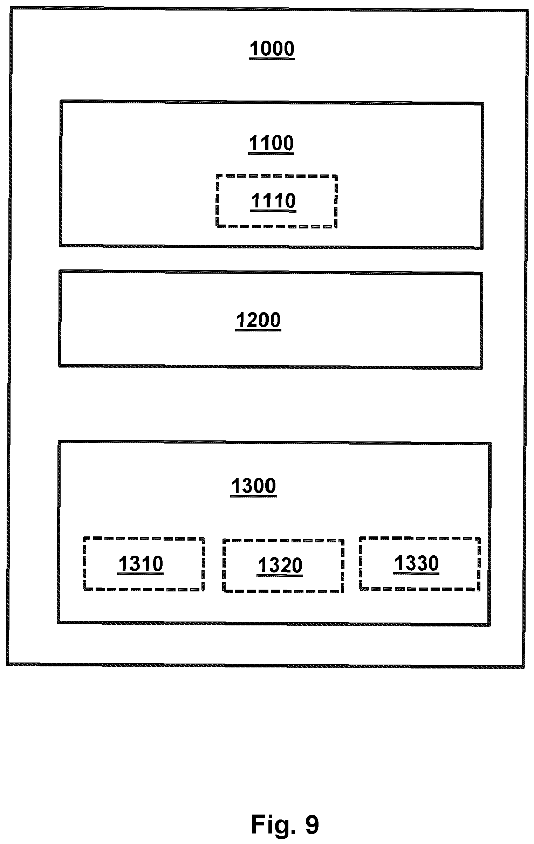

Fig. 9 illustrates another embodiment of the method of providing 1000 a walkable access gangway between a vessel 10 and an offshore structure 20. In addition to the acts described in figure 8, the method 1000 may further be modified by one or more of the following acts:
The act of generating 1100 is performed by an act of driving 1110 the generator 210 using an annual gear 150 pivotally arranged between the base extension 120 and a base 110.

The act of operating 1300 may comprise an act of turning 1310 the base extension 120 by using only electromagnetic drivers 180 and/or pivoting 1320 the base extension 120 by using only electromagnetic drivers 180.

The act of operating 1300 may comprise an act of extending 1330 an extension arm 122, 124 from the base extension 120 by using only one or more electromagnetic drivers 180.

The act of operating 1300 the gangway 100 may be performed using power provided via a variable frequency drive (VFD) 220 powered by a power supply 230, from the energy storage device 250, or both.

## Claims

1. A gangway system (100) providing walkable access between a vessel (10) and an offshore structure (20), the gangway system (100) comprising a base (110), and from the base (110) a base extension (120) configured to operate towards an offshore structure (20), the gangway system (100) being operated by a drive system (170) powered by electric power provided via a power train (200).

2. The gangway system (100) according claim 1, wherein the base extension (120) being pivotally arranged on the base (110) around a pivot axis (60), the base extension (120) having an annual gear (150) extending from a pivot point (140) on the pivot axis (60) to a pinion (160) driven by the drive system (170).

3. The gangway system (100) according to claim 1 or 2, wherein the gangway system (100) further comprising a generator (210) connected to an energy storage device (250) being part of the power train (200), the generator (210) connected to a mechanical arrangement (130) configured to convert mechanical movements between the gangway (100)/base extension (120) and the vessel (10), the gangway (100)/base extension (120) and the offshore structure (20), or both, into electrical energy.

4. The gangway system (100) according to any one or more of claims 1-3, wherein the power train (200) comprises a variable frequency drive VFD (220) configured to be driven by a power supply (230) and/or the energy storage device (250); the variable frequency drive VFD (220) configured to driving and operating the drive system (170).

5. The gangway (100) according to one or more of the previous claims, wherein the drive system (170) comprises one or more electromagnetic drivers (180) such as electric motors or electric actuators.

6. The gangway system (100) according to one or more of the previous claims, wherein the base extension (120) comprises one or more extension arms (122, 124) configured to extend from the base extension (120) along an extension axis (50) defined by the base extension (120).

7. The gangway system (100) according to one or more of claims 3-7, wherein the generator (210) and the drive system (170) are the same unit or units.

8. A method of providing (1000) walkable access between a vessel (10) and an offshore structure (20), the method (1000) comprising acts of:
- generating (1100) energy by a generator (210) driven by mechanical movements of a base extension (110):
- storing (1200) energy in an energy storage device (250), which is connected to a power train (200) configured to operate the base extension (110);
- operating (1300) the base extension (110) by using energy from the energy storage device (250).

9. The method (1000) according to claim 8 wherein the act of generating (1100) is performed by
- driving (1110) the generator (210) using an annual gear (150) pivotally arranged between the base extension (120) and a base (110).

10. The method (1000) according to claim 8 or 9 wherein the act of operating (1300) comprises an act of
- turning (1310) the base extension (120) by using only electromagnetic drivers (180) and/or
- pivoting (1320) the base extension (120) by using only electromagnetic drivers (180)

11. The method (1000) according to one or more of claims 8-10 wherein the act of operating (1300) comprises an act of
- extending (1330) an extension arm (122, 124) from the base extension (120) by using only one or more electromagnetic drivers (180).

12. The method (1000) according to one or more of claims 8-11 wherein the act of operating (1300) the gangway (100) is performed using power provided via a variable frequency drive (VFD) (220) powered by a power supply (230), from the energy storage device (250), or both.

13. A gangway system (100) having a sensor suite (190), power line means (192) and controlling means (194) adapted to execute the acts of the method of claims 9-13.

14. A computer program product comprising instructions to cause the gangway system (100) according to claims 13 to execute the acts according to the method of claims 8-12.

15. A computer-readable medium having stored thereon the computer program of claim 14.
